# EUROPEAN PATENT APPLICATION

(11) **EP 2 372 999 A1**
(43) Date of publication of application: **05.10.2011**
(21) Application number: 10157300.4
(22) Date of filing: 23.03.2010
(51) Int. Cl.: H04N 5/225, G02B 27/01

(54) **Wearable system for filming, recording and communicating during sport activity**

(71) Applicant: Mashiah, Eliyahu, 52506 Ramat Gan (IL)
(72) Inventor: Mashiah, Eliyahu, 52506 Ramat Gan (IL)
(74) Representative: Lecomte, Didier

(57) **Abstract**

The present invention provides a system for acquiring and displaying images obtained from a user's field of vision back to said user, when said user engaged in an active motion activity, comprising;
a. a body mounted camera (BMC) for acquiring an image of a user's field of vision;
b. a body-mounted remote control unit (RCU) in electronic communication with said BMC for controlling said BMC;
c. a body mounted remote display (RD) in electronic communication with said BMC and said RCU, for displaying said image back to said user.

The RD is mounted on said user's body such that said image is displayed to said user whilst said field of vision of said user is constantly maintained clear and unobstructed.

## Description

### FIELD OF THE INVENTION

The present invention relates to a method and apparatus for facilitating operation of a body mounted camera.

### BACKGROUND OF THE INVENTION

In the prior art, several patents provide cameras having head-mounted displays.

US patent application US20050174470 provides a body mounted camera and a see-through image display portion displaying a photographic frame. This frame is superimposed on the field of view directly observed by a photographer. A remote controller includes a second operation switch for setting the visual angle of the photographic frame when viewed from the photographer.

Similarly Israel patent application IL0117032A0 provides a helmet-mounted video system with a heads-up display, to allow a videagrapher to record and observe both reality and the recorded video simultaneously. The system is provided with a remote control and power supply to allow easier use of the device.

However it will be appreciated that the superimposition of a still or moving image over one's field of vision may substantially impair visibility, due both to some inevitable delay and an inevitable degree of interference between actual and superimposed views. This will be particularly acute in cases where visibility and unobstructed field of view are paramount, such as in sports applications where a sportsman using a head mounted camera wishes to record the action without impairing his own performance or abilities. Downhill skiers, windsurfers, skydivers, hunters, soldiers, and the like may find use for such a system except that the superimposition of an auxiliary video image will involve some degree of interference which may prove critical.

Hence, an improved method for controlling and observing images from a body mounted camera is still a long felt need.

### SUMMARY OF THE INVENTION

It is one object of the present invention to provide a system for acquiring and displaying images obtained from a user's field of vision back to said user, especially useful for a user engaged in an active motion activity, comprising;
a. at least one body mounted camera (BMC) for acquiring at least one image of a user's field of vision;
b. at least one body-mounted remote control unit (RCU) in electronic communication with said BMC for controlling said BMC; and,
c. at least one body mounted remote display (RD) in electronic communication with said BMC and said RCU, for displaying said at least one image back to said user;
wherein said RD is mounted on said user's body such that said image is displayed to said user whilst said field of vision of said user is constantly maintained clear and unobstructed.
Whilst a clear and unobstructed field of vision to said user is constantly maintained.

It is another object of the present invention to provide the system as defined above, wherein said BMC is selected from a group consisting of video camera, still camera, thermal imaging system, night-vision system, ultraviolet imaging system, and binocular system or any combination thereof.

It is another object of the present invention to provide the system as defined above, additionally comprising at least one sensor coupled to said RCU for sensing parameters selected from a group consisting of velocity, altitude, pressure, wind-speed, wave-height, and direction of said user.

It is another object of the present invention to provide the system as defined above, wherein said RD is adapted to display said parameters to said user.

It is another object of the present invention to provide the system as defined above, wherein said RD is adapted to provide data concerning said BMC, wherein said data is selected from the group consisting of camera status, battery state, and remaining memory or any combination thereof.

It is another object of the present invention to provide the system as defined above, wherein said RCU is mounted on a body part of said user selected from the group consisting of arm, wrist, neck, glove, waist, chest, thigh, and leg or any combination thereof.

It is another object of the present invention to provide the system as defined above, wherein said RD is mounted on a body part of said user selected from a group consisting of arm, wrist, neck, glove, waist, chest, thigh, and leg or any combination thereof.

It is another object of the present invention to provide the system as defined above, wherein said RCU and RD are mounted by attachment means selected from the group consisting of: straps, cords, buckles, fabric, wire, hooks, grapples, Velcro, snaps, buttons, screws, lanyards, magnets, hooks or any combination thereof.

It is another object of the present invention to provide the system as defined above, wherein said RCU and said RD are mounted on a different user than said user upon which said BMC is mounted.

It is another object of the present invention to provide the system as defined above, additionally comprising means for voice activation of said BMC.

It is another object of the present invention to provide the system as defined above, wherein said BMC is activated according to a predetermined protocol of motion.

It is another object of the present invention to provide the system as defined above, additionally comprising a microphone and speaker and/or headphones.

It is another object of the present invention to provide the system as defined above, wherein said RD and said RCU are provided as a single component configured for being worn by said user.

It is another object of the present invention to provide the system as defined above, wherein said RCU is configured for being worn as part of a glove on the hand of said user.

It is another object of the present invention to provide the system as defined above, wherein said BMC is configured for being worn as part of a helmet on the head of said user.

It is another object of the present invention to provide a method for acquiring and displaying at least one image obtained from a user's field of vision back to said user. The method comprises steps selected inter alia from:
a. providing (i) at least one body mounted camera (BMC) for obtaining at least one image of a user's field of vision; (ii) at least one body mounted remote control unit (RCU) in electronic communication with said BMC for controlling said BMC; and, (iii) at least one body mounted remote display (RD) in electronic communication with said BMC and said RCU, for displaying said at least one image to said user;
b. electronically communicating said RCU with said BMC;
c. electronically communicating said RD with (i) said BMC; and, (ii) said RCU;
d. mounting said RD on said user's body;
e. operating said BMC via said RCU thereby obtaining at least one image from said user's field of vision; and,
f. displaying said at least one image to said user via said RD;
wherein said RD is mounted on said user's body such that said step of displaying said at least one image to said user is performed whilst constantly maintaining a clear and unobstructed field of vision to said user.

It is another object of the present invention to provide the method as defined above, additionally comprising the step of providing data concerning said BMC, wherein said data is selected from a group consisting of camera status, battery state, and remaining memory or any combination thereof.

It is another object of the present invention to provide the method as defined above, additionally comprising the step of selecting said BMC from a group consisting of video camera, still camera, thermal imaging system, night-vision system, ultraviolet imaging system, and binocular system or any combination thereof.

It is another object of the present invention to provide the method as defined above, wherein said step of mounting said RD on said user's body is performed on body parts of said user selected from the group consisting of arm, wrist, neck, glove, waist, chest, thigh, and leg or any combination thereof.

It is another object of the present invention to provide the method as defined above, additionally comprising the step of mounting said BMC on a body part of said user selected from a group consisting of arm, wrist, neck, glove, waist, chest, thigh, and leg or any combination thereof.

It is another object of the present invention to provide the method as defined above, wherein said step of mounting said RD on said user's body is performed using attachment means selected from a group consisting of: straps, cords, buckles, fabric, wire, hooks, grapples, Velero, snaps, buttons, screws, lanyards, magnets, and hooks.

It is another object of the present invention to provide the method as defined above, additionally comprising the step of sensing parameters selected from a group consisting of velocity, altitude, pressure, wind-speed, wave-height, direction.

It is another object of the present invention to provide the method as defined above, additionally comprising the step of displaying said parameters to said user via said RD.

It is another object of the present invention to provide the system as defined above, additionally comprising a microphone and speaker and/or headphones.

It is another object of the present invention to provide the method as defined above, additionally comprising the step of voice activating said BMC.

It is another object of the present invention to provide the method as defined above, additionally comprising the step of activating said BMC according to a predetermined protocol of motion.

It is another object of the present invention to provide the method as defined above, additionally comprising the step of providing said RD and said RCU as a single component configured for being worn by said user.

It is still an object of the present invention to provide the method as defined above, additionally comprising the step of configuring said RCU for being worn as part of a glove on the hand of said user.

It is lastly an object of the present invention to provide the method as defined above, additionally comprising the step of configuring said BMC for being worn as part of a helmet on the head of said user.

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the spirit and scope of the invention as defined by the appended claims.

### BRIEF DESCRIPTION OF THE DRAWINGS

In order to understand the invention and to see how it may be implemented in practice, a plurality of embodiments will now be described, by way of non-limiting example only, with reference to the accompanying drawings, in which
FIGS. 1A and 1B present glove mounted control systems.
FIGS. 2A and 2B present glove mounted display systems.
FIG. 3 presents a combined glove mounted display and control system.
FIG. 4 presents a compact wearable sports camera
FIGS. 5A-C presents helmet-mounted cameras.

### DETAILED DESCRIPTION OF PREFERRED EMBODIMENTS

The following description is provided, alongside all chapters of the present invention, so as to enable any person skilled in the art to make use of said invention and sets forth the best modes contemplated by the inventor of carrying out this invention. Various modifications, however, will remain apparent to those skilled in the art, since the generic principles of the present invention have been defined specifically to provide a helmet-mounted camera remote control and display.

In the following detailed description, numerous specific details are set forth in order to provide a thorough understanding of embodiments of the present invention. However, those skilled in the art will understand that such embodiments may be practiced without these specific details. Reference throughout this specification to "one embodiment" or "an embodiment" means that a particular feature, structure, or characteristic described in connection with the embodiment is included in at least one embodiment of the invention.

The term **'BMC'** hereinafter refers to a body mounted camera, such as head-mounted, arm-mounted, or helmet-mounted cameras.

The term **'RCU'** hereinafter refers to a remote control unit adapted for use with a BMC, generally provided with controls appropriate for still or video camera work such as 'snap', 'record', 'stop', 'zoom', and the like.

The term **'RVD'** hereinafter refers to a remote video display unit adapted for use with a BMC, allowing the user of an BMC to see the images or video produced by the BMC.

The term **'plurality'** refers hereinafter to any positive integer e.g., 1, 2, 3...

The term **'field of vision'** refers hereinafter to the angular extent of the observable world that is seen at any given moment.

The term **'control'** refers hereinafter to activation, de-activation of the camera; stopping, starting, and re-starting recording images; zoom-in and zoom-out, rotating the camera or any operation that concerns the general function of the camera.

The term **'clear field of vision'** or the term **'unobstructed field of vision'** refers hereinafter to an unimpeded field of vision.

The term **'Organic Light Emitting Diode (OLED)'** refers hereinafter to any light emitting diode (LED) whose emissive electroluminescent layer is composed of a film of organic compounds.

It will be appreciated by the amateur sportsman that at times it may be desirable to record one's sporting exploits for the delight or edification of others. A particularly apt system for accomplishing this goal is the head - or helmet mounted camera, which allows one to record video or stills of a scene. Generally the camera will be mounted in a fixed direction with respect to the head or helmet, and generally this fixed direction will be largely parallel to the direction of the user's field of view (field of vision).

In this manner a sportsman, hunter, soldier, outdoorsman, orienteer, or the like can record video data without obstructing his or her field of view and with a minimum of interference.

However, there are problems of camera control that arise. To effectively control the camera and/or monitor its operation, one must often remove the helmet and/or camera, check or change its settings, and then replace the helmet and/or camera. Obviously this is a time-consuming and potentially awkward procedure, undesirable in many sporting situations such as during free fall, while wearing thick gloves, or whilst hunting the deadly snipe.

The felicitous solution of the present invention is to provide a separate remote control (RCU) unit such as a glove-mounted control with large control buttons, and a remote video display (RD). These devices may be mounted on the users body such as on the arm, wrist, or waist, or on clothes the user is wearing such as on gloves, jackets, or the like. Attachment means in the form of hooks, grapples, Velcro, snaps, buttons. screws, lanyards, magnets, snap hooks, spring hooks, straps, cords, buckles. fabric, wire or the like may be employed to attach the RD and RCU to the user's body, to clothes on the user's body, or to another location. Further beneficial locations and attachment means will be obvious to one skilled in the art.

The main advantages of such attachment is the fact that the user can easily control the operation of the camera (e.g., activate or deactivate said camera) even while wearing (for example) thick gloves, while keeping the user's field of vision unobstructed.

The present invention provides a remote control unit (RCU) and remote video display (RVD) as part of a body-mounted camera (BMC) system.

The RCU is adapted to control most or all of the functions of the camera, including but not limited to zoom in/out, mode (video/stills/preview), start/stop recording, pan/tilt (if available), brightness, intensity, recording quality, resolution, frames per second, and the like.

The present invention provides a system for displaying images from a user's field of vision to the user. The system comprises:
a. at least one body mounted camera (BMC) for acquiring images;
b. at least one body-mounted remote control unit (RCU) in electronic communication with said BMC and adapted to control it; and,
c. at least one body mounted remote display (RD) in electronic communication with said BMC and said RCU and adapted to display images to the user.

The RD is mounted on the user's body such that image data (or data from other sources) is displayed to the user while leaving a clear and unobstructed field of vision to the user.

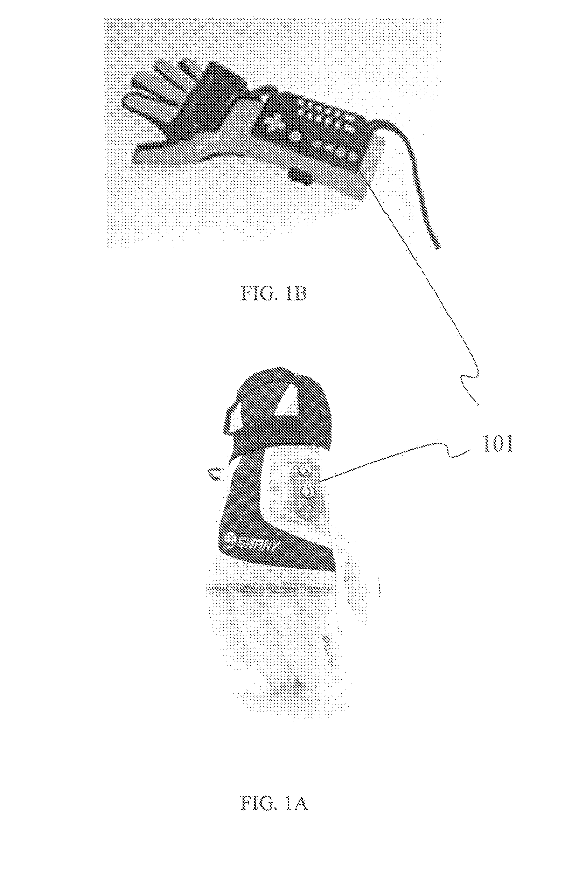

In Fig. 1a and 1b one sees gloves provided with controls for ease of use in cold weather or the like. The controls 101 can be operated with the fingers of a gloved hand, allowing the user to operate the camera without removing his or her gloves.

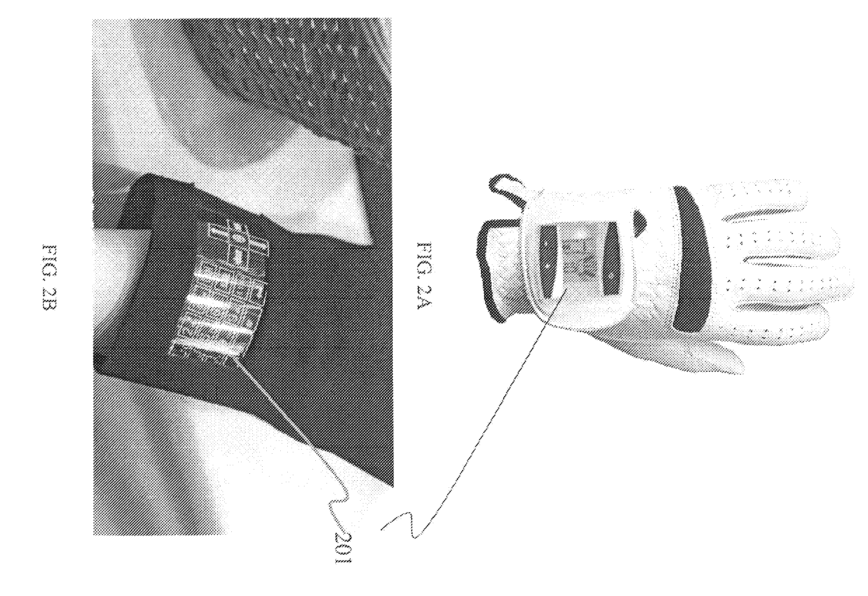

In Figs. 2a and 2b one sees various embodiments of worn display screens. In Fig. 2a, a display screen 201 is shown embedded in a glove. In Fig. 2b an organic light emitting diode (OLED) display screen is shown embedded in the sleeve of garment.

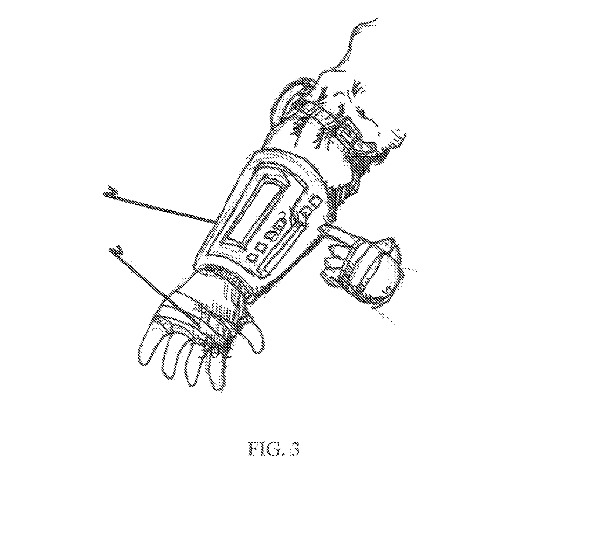

In Fig. 3 an embodiment of the device is shown where both display screen and controls are provided on the same glove mount. The screen 301 allows viewing of the captured image or video, while the controls 302 allow one to control the device.

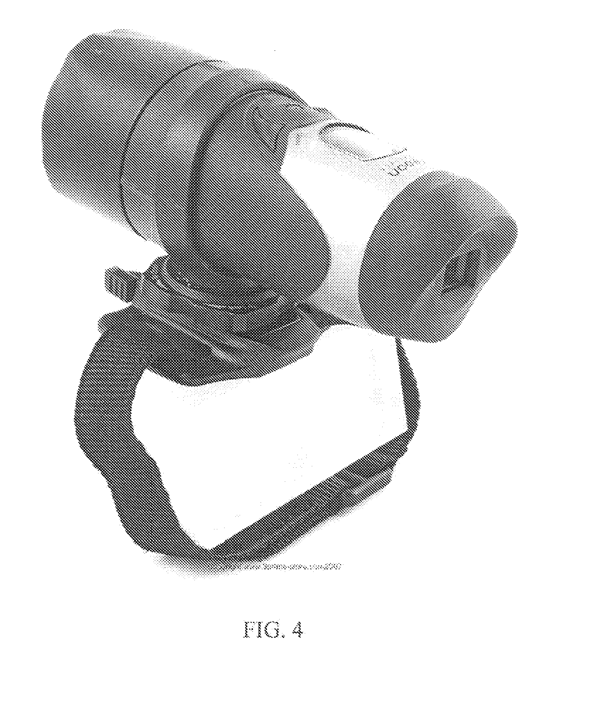

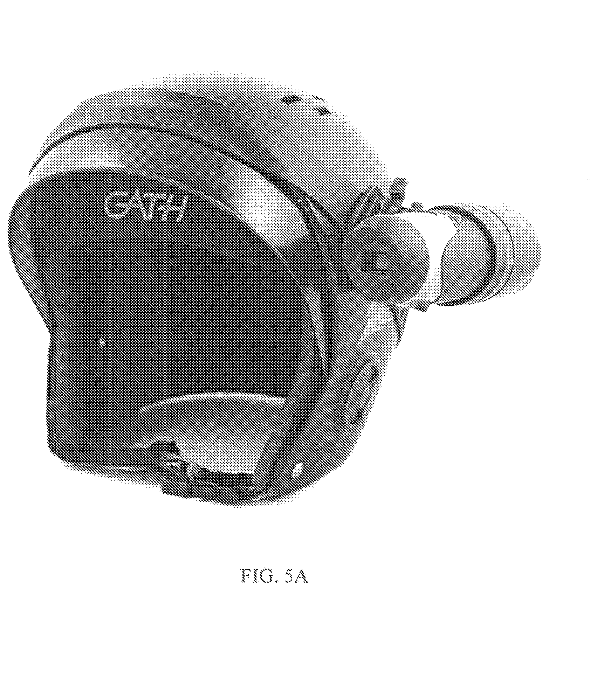

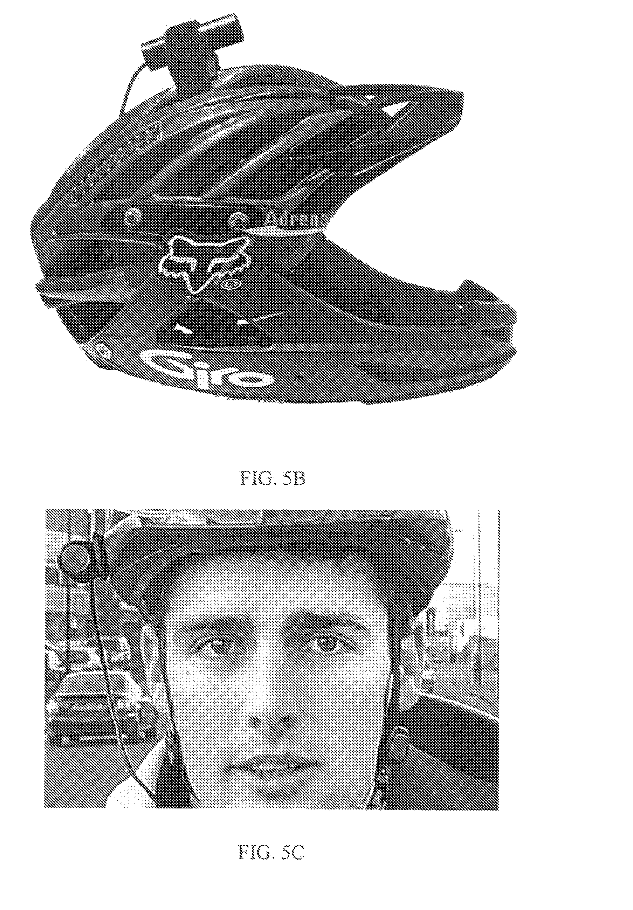

Fig. 4 presents a small camera (often referred to as a barrel or bullet camera) provided with a strap such that it may be worn, e.g. on the arm or head. Figures 5a-5c show several configurations of helmets with attached cameras. Realtime control over these cameras is generally difficult given that the user's hands are generally occupied with e.g. riding a bicycle.

In another embodiment of the invention, the RCU and/or RD are not worn or carried by the person wearing the helmet mounted camera, but rather are worn or carried by another person such as a coach, judge, assistant, friend, cameraman, or other interested party. This way a sportsman for instance can concentrate totally on the task at hand, while a remote camera operator can change the camera parameters such as zoom.

In another preferred embodiment of the invention, the device is provided with a microphone and speaker and/or headphones. In this way audio from the user or his surroundings can be recorded, and feedback can be given to the operator (such as the recorded audio, or audio signals from the camera system, for example sounds indicating recording state, battery level, and the like.

A further embodiment of the device provides for voice activated control over the camera, for which a helmet- or body mounted microphone will be found useful. In this embodiment the need for buttons and the like to control the devie is reduced or eliminated. Means for such voice control are known in the field of voice recognition and implementations will be clear to one skilled in the art.

According to another embodiment, BMC is activated by gesture, such as a sequence of finger movements or other physical motion. This may consist for example of a certain gesture that will activate a given BMC function. For example, the directors motion for 'cut!' (a slashing motion across the throat) may be used to stop recording, while the directors motion for 'action!' may be used to start recording. Other hand gestures such as the three middle fingers, serbian three fingers, 'gig-em' sign, horizontal arm slash, vertical arm slash, and the like may be used. Extensions and generalizations of this control mechanism will be obvious to one skilled in the art of gestural control.

In a preferred embodiment of the device, indicators such as LEDs or other light sources are provided to allow the user to quickly determine the status of the camera; such as whether it is recording or not, battery state, memory left, and other status information. In one embodiment of the invention, the display screen is not provided and only the aforementioned status indicators are provided.

In another embodiment of the invention, the helmet mounted camera is provided with pan/tilt capabilities. In this way a variety of scenes can be captured that would otherwise be impossible to capture. For instance, one may observe one's competitors in bike race or downhill skiing competition by panning the camera to observe the action behind one's back. This camera direction can be set before the start of the game or race. Furthermore, the camera may also be rotated during the 'action' of a sporting event or the like, especially if the camera is operated by another person remotely. According to one embodiment of the present invention, the RD and RCU are provided in a single unit. In another embodiment of the invention, the RD and RCU are provided as physically separate units.

A variety of communication means may be employed to control the BMC and receive information from it. These may include but are not limited to Bluetooth, WiFi, packet radio, FM, AM, CDMA, infrared, and cable connection.

In another embodiment of the invention, a microphone and headphones provided with the device are used to implement a hands-free solution for cellular telephony. In this embodiment, provision is made to connect a cell-phone to the microphone and headphones, which may be supplied with standard 1/8 inch, RCA, USB, mini-USB, or wireless connections such as Bluetooth or the like for this purpose. Provision is made that if an incoming call is received while filming with the camera, a message to this effect is shown on the RD and/or an audio indication is given through the earphones, but filming is not interrupted, Optionally, the filming may be interrupted if the call is accepted.

According to another embodiment of the present invention, the RD is adapted to display data concerning said BMC such as camera status, battery state, or memory remaining.

According to another embodiment of the present invention, the BMC may comprise any imaging system such as a video camera, still camera, thermal imaging system, night-vision system, ultraviolet imaging system, or binocular system.

According to another embodiment of the present invention, the RCU or the RD is mounted on a body part of said user selected from a group consisting of arm, wrist, neck, glove, waist, chest, thigh, and leg or any combination thereof

According to another embodiment of the present invention, the RCU and RD are mounted by attachment means selected from a group consisting of straps, cords, buckles, fabric, wire, hooks, grapples, Velcro, snaps, buttons, screws, lanyards, magnets, and hooks.

According to another embodiment of the present invention, the system additionally comprising sensors adapted to sense parameters selected from a group consisting of velocity, altitude, pressure, wind-speed, wave-height, direction.

According to another embodiment of the present invention, a method for displaying images from a user's field of vision to said user. The method comprising steps selected inter alia from: (a) providing (i) at least one body mounted camera (BMC) for constantly photographing said images; (ii) at least one body mounted remote control unit (RCU); and, (iii) at least one body mounted remote display (RD); (b) electronically communicating said RCU with said BMC; (c) electronically communicating said RD with (i) said BMC; and, (ii) said RCU; (d) mounting said RD on said user's body; (e) operating said BMC via said RCU; and, (f) displaying said images through said RD to said user.

It should be emphasized that the RD is mounted on said user's body such that the user may observe the RD but is not forced to do so. In this way the user's field of view remains unobstructed, allowing him (for instance) to concentrate on the road ahead while biking. Occasionally, when the situation permits, the user can glance at the RD to verify correct operation of the BMC.

According to another embodiment of the present invention, additional data is present on said RD such as camera status, battery state, or memory remaining.

According to another embodiment of the present invention, the method as defined above uses any of a variety of imaging systems, such as a standard video camera, still camera, thermal imaging system, night-vision system, ultraviolet imaging system, and binocular system or any combination thereof.

According to another embodiment of the present invention the step of mounting said RD on said user's body is performed on body parts of said user selected from a group consisting of arm, wrist, neck, glove, waist, chest, thigh, and leg or any combination thereof.

According to another embodiment of the present invention, the method as defined above additionally comprises a step of mounting said BMC on a body part of said user selected from a group consisting of arm, wrist, neck, glove, waist, chest, thigh, and leg or any combination thereof.

According to another embodiment of the present invention, the method as defined above additionally comprises attachment means selected from a group consisting of: straps, cords, buckles, fabric, wire, hooks, grapples, Velero, snaps, buttons, screws, lanyards, magnets, and hooks.

According to another embodiment of the present invention, the method as defined above additionally comprises a step of sensing parameters selected from a group consisting of velocity, altitude, pressure, wind-speed, wave-height, direction.

According to another embodiment of the present invention, the method as defined above additionally comprises a step of displaying said parameters to said user via said RD.

## Claims

1. A system for acquiring and displaying images obtained from a user's field of vision back to said user, especially useful for a user engaged in an active motion activity, comprising;
a. at least one body mounted camera (BMC) for acquiring at least one image of a user's field of vision;
b. at least one body-mounted remote control unit (RCU) in electronic communication with said BMC for controlling said BMC; and,
c. at least one body mounted remote display (RD) in electronic communication with said BMC and said RCU, for displaying said at least one image back to said user;
wherein said RD is mounted on said user's body such that said image is displayed to said user whilst said field of vision of said user is constantly maintained clear and unobstructed.
Whilst a clear and unobstructed field of vision to said user is constantly maintained.

2. The system of claim 1, wherein said BMC is selected from a group consisting of video camera, still camera, thermal imaging system, night-vision system, ultraviolet imaging system, and binocular system or any combination thereof.

3. The system of claim 1, additionally comprising at least one sensor coupled to said RCU for sensing parameters selected from a group consisting of velocity, altitude, pressure, wind-speed, wave-height, and direction of said user.

4. The system of claim 3, wherein said RD is adapted to perform at least one selected from (i) display said parameters to said user; or (ii) provide data concerning said BMC, wherein said data is selected from the group consisting of camera status, battery state, and remaining memory or any combination thereof.

5. The system of claim 1, wherein said RCU or said RD is mounted on a body part of said user selected from the group consisting of arm, wrist, neck, glove, waist, chest, thigh, and leg or any combination thereof; further wherein said RCU or said RD are mounted by attachment means selected from the group consisting of: straps, cords, buckles, fabric, wire, hooks, grapples, Velcro, snaps, buttons, screws, lanyards, magnets, hooks or any combination thereof.

6. The system of claim 1, wherein said RCU and said RD are mounted on a different user than said user upon which said BMC is mounted.

7. The system of claim 1, additionally comprising at least one selected from means for voice activation of said BMC; microphone and speaker and/or headphones..

8. The system of claim 1, wherein said BMC is activated according to a predetermined protocol of motion.

9. The system of claim 1, wherein said RD and said RCU are provided as a single component configured for being worn by said user.

10. The system of claim 1, wherein said RCU is configured for being worn as part of a glove on the hand of said user; further wherein said BMC is configured for being worn as part of a helmet on the head of said user.

11. A method for acquiring and displaying at least one image obtained from a user's field of vision back to said user, said method comprising steps of:
a. providing (i) at least one body mounted camera (BMC) for obtaining at least one image of a user's field of vision; (ii) at least one body mounted remote control unit (RCU) in electronic communication with said BMC for controlling said BMC; and, (iii) at least one body mounted remote display (RD) in electronic communication with said BMC and said RCU, for displaying said at least one image to said user;
b. electronically communicating said RCU with said BMC;
c. electronically communicating said RD with (i) said BMC; and, (ii) said RCU;
d. mounting said RD on said user's body;
e. operating said BMC via said RCU thereby obtaining at least one image from said user's field of vision; and,
f. displaying said at least one image to said user via said RD;
wherein said RD is mounted on said user's body such that said step of displaying said at least one image to said user is performed whilst constantly maintaining a clear and unobstructed field of vision to said user.

12. The method of claim 11, additionally comprising the step of providing data concerning said BMC, wherein said data is selected from a group consisting of camera status, battery state, and remaining memory or any combination thereof.

13. The method of claim 11, additionally comprising the step of selecting said BMC from a group consisting of video camera, still camera, thermal imaging system, night-vision system, ultraviolet imaging system, and binocular system or any combination thereof.

14. The method of claim 11, wherein said step of mounting said RD or said BMC on said user's body is performed on body parts of said user selected from the group consisting of arm, wrist, neck, glove, waist, chest, thigh, and leg or any combination thereof; further wherein said step of mounting said RD on said user's body is performed using attachment means selected from a group consisting of: straps, cords, buckles, fabric, wire, hooks, grapples, Velero, snaps, buttons, screws, lanyards, magnets, and hooks.

15. The method of claim 11, additionally comprising at least one step selected from (i) sensing parameters selected from a group consisting of velocity, altitude, pressure, wind-speed, wave-height, direction; or (ii) displaying said parameters to said user via said RD.

16. The method of claim 11, additionally comprising at least one step selected from voice activating said BMC; or activating said BMC according to a predetermined protocol of motion.

17. The method of claim 11, additionally comprising the step of providing said RD and said RCU as a single component configured for being worn by said user.

18. The method of claim 11, additionally comprising at least one step selected from (i) configuring said RCU for being worn as part of a glove on the hand of said user; or (ii) configuring said BMC for being worn as part of a helmet on the head of said user.
